# EUROPÄISCHE PATENTANMELDUNG

(11) **EP 1 661 797 A1**
(43) Veröffentlichungstag der Anmeldung: **31.05.2006**
(21) Anmeldenummer: 05025524.9
(22) Anmeldetag: 23.11.2005
(51) Int. Cl.: B62D 63/06, B60D 1/06

(54) **Fahrzeuggespann mit einer Dämpfungseinrichtung**

(30) Priorität: 26.11.2004 DE 102004057116
(71) Anmelder: Stursberg, Christian, Dipl.-Ing., 51467 Bergisch Gladbach (DE)
(72) Erfinder: Stursberg, Christian, Dipl.-Ing., 51467 Bergisch Gladbach (DE)
(74) Vertreter: Starke, Günter

(57) **Zusammenfassung**

Die Erfindung betrifft ein Fahrzeuggespann, bestehend aus einem Zugfahrzeug und einem Anhänger, die mit einer Kupplungseinrichtung, die einen an dem Zugfahrzeug befestigten Kupplungskopf und eine mit dem Kupplungskopf beweglich verbindbare an dem Anhänger befestigte Deichsel aufweist, wobei weiterhin eine Dämpfungseinrichtung gegen Schlingerbewegungen und Wankbewegungen des Anhängers gegenüber dem Zugfahrzeug vorgesehen ist.

Erfindungsgemäß wird ein Fahrzeuggespann bestehend aus einem Zugfahrzeug 1 und einem Anhänger 2 bereitgestellt, bei dem die Dämpfungseinrichtung sowohl Schlingerbewegungen als auch Wankbewegungen wirkungsvoll dämpft. Dies wird dadurch erreicht, dass die Dämpfungseinrichtung 16 vertikal und horizontal versetzt zu der Kupplungseinrichtung 7 angeordnet ist. Durch diese Anordnung ist eine besonders effektive Dämpfung sowohl der Schlingerbewegungen als auch der Wankbewegungen des Anhängers 2 gegenüber dem Zugfahrzeug 1 möglich.

## Beschreibung

Die Erfindung betrifft ein Fahrzeuggespann, bestehend aus einem Zugfahrzeug und einem Anhänger, die mit einer Kupplungseinrichtung, die einen an dem Zugfahrzeug befestigten Kupplungskopf und eine mit dem Kupplungskopf beweglich verbindbare an dem Anhänger befestigte Deichsel aufweist, wobei weiterhin eine Dämpfungseinrichtung gegen Schlingerbewegungen und Wankbewegungen des Anhängers gegenüber dem Zugfahrzeug vorgesehen ist.

Ein solches gattungsgemäßes Fahrzeuggespann ist aus der DE 100 00 744 C2 bekannt. Bei diesem Fahrzeuggespann ist eine herkömmliche Kupplungsvorrichtung zum Verbinden des Anhängers mit dem Zugfahrzeug vorgesehen. Dabei ist diese Kupplungsvorrichtung insofern modifiziert, dass an einer den Kupplungskopf tragenden Kupplungstragstange ein Querträger befestigt ist, an dem wiederum zwei Dämpfungselemente befestigt sind. Diese Dämpfungselemente werden über eine geeignete Einrichtung an der Deichsel des Anhängers befestigt. Diese Dämpfungseinrichtung kann Schlingerbewegungen des Anhängers gut dämpfen, dagegen werden aber Wankbewegungen des Anhängers konstruktionsbedingt nur unvollkommen gedämpft.

Der Erfindung liegt die Aufgabe zugrunde, ein Fahrzeuggespann bestehend aus einem Zugfahrzeug und einem Anhänger bereitzustellen, bei dem die Dämpfungseinrichtung sowohl Schlingerbewegungen als auch Wankbewegungen wirkungsvoll dämpft.

Diese Aufgabe wird dadurch gelöst, dass die Dämpfungseinrichtung getrennt von der Kupplungseinrichtung an dem Zugfahrzeug und dem Anhänger angeordnet ist. Diese Ausbildung ermöglicht durch die Trennung der Dämpfungseinrichtung von der Kupplungseinrichtung insbesondere eine wesentlich bessere Dämpfung der Wankbewegungen des Anhängers gegenüber dem Zugfahrzeug als dies beim Stand der Technik möglich ist.

In Weiterbildung der Erfindung ist die Dämpfungseinrichtung vertikal und horizontal versetzt zu der Kupplungseinrichtung angeordnet. Durch diese Anordnung ist eine besonders effektive Dämpfung sowohl der Schlingerbewegungen als auch der Wankbewegungen des Anhängers gegenüber dem Zugfahrzeug möglich.

In weiterer Ausgestaltung der Erfindung ist die Dämpfungseinrichtung im Bereich des Dachs des Zugfahrzeugs angeordnet. Diese Anordnung ermöglicht eine einfache Befestigung der Dämpfungseinrichtung, die analog zu einem Dachgepäckträger an den serienmäßig vorhandenen Befestigungspunkten für ein solches System angebracht wird.

In weiterer Ausgestaltung weist die Dämpfungseinrichtung eine trennbare Verbindungseinrichtung auf. Diese weist in Weiterbildung einen Kupplungsbolzen und eine damit zusammenwirkende Kupplungspfanne auf. Diese Ausbildung hat den Vorteil, dass die Dämpfungseinrichtung beispielsweise zum Ankuppeln und Abkuppeln des Anhängers nicht vollständig an den Befestigungspunkten am Dach befestigt oder gelöst werden muss, sondern beispielsweise zum Abkuppeln der Kupplungsbolzen aus der Kupplungspfanne gelöst wird. Die Verbindungseinrichtung ist um die durch den Kupplungsbolzen horizontal verlaufende Achse drehbeweglich.

In Weiterbildung der Erfindung weist die Dämpfungseinrichtung eine in einem Dämpfungsgehäuse angeordnete Dämpfungsscheibe auf. Dabei ist die Dämpfungsscheibe in Abstimmung mit dem vertikalen und horizontalen Abstand der Dämpfungseinrichtung von der Kupplungseinrichtung und den geforderten Einschlagwinkel von dem Zugfahrzeug zu dem Anhänger in dem Dämpfungsgehäuse bewegbar. Die Dämpfungseinrichtung kann aber im Rahmen der Erfindung auch anders aufgebaut sein, beispielsweise ist die Verwendung eines oder mehrerer teleskopartig zu bewegender Dämpfelemente (Stossdämpferprinzip) vorgesehen. Bei einer solchen Ausbildung ist das Dämpfelement mit einem Ende an dem Anhänger und mit dem anderen Ende über eine geeignete Einrichtung an den erwähnten Befestigungspunkten auf dem Dach des Zugfahrzeugs befestigt. Auch bei dieser Ausbildung ist die zuvor beschriebene Verbindungseinrichtung vorgesehen.

In weiterer Ausgestaltung weist der Anhänger einen über das Dach des Zugfahrzeugs ragenden Überbau auf. Dieser Überbau bietet einerseits zusätzlichen Stauraum, andererseits ist zwischen dem Dach und dem Überbau die Dämpfungseinrichtung vorteilhaft anzubringen ohne dass an dem Anhänger zusätzliche Befestigungseinrichtungen nur für die Dämpfungseinrichtung angebracht werden müssen.

In Weiterbildung der Erfindung ist der Überbau um eine Schwenkachse im vorderen Bereich des Anhängers horizontal zu der Längsachse des Fahrzeuggespanns schwenkbar. Diese Ausbildung ermöglicht eine weitgehende Ausnutzung des zur Verfügung stehenden Raums zwischen dem Dach des Zugfahrzeugs und dem Überbau als für den Überbau zu nutzender Stauraum. Das System ist so abgestimmt, dass im Fahrbetrieb beispielsweise beim Überfahren von Bodenwellen die nötige Beweglichkeit der einzelnen Teile zueinander gegeben ist. Zur Dämpfung der Bewegungen um die Schwenkachse kann bei Bedarf ein zusätzlicher Dämpfer vorgesehen sein, der bevorzugt zwischen der Schenkachse und der nachfolgend beschriebenen Spannvorrichtung angeordnet ist.

In einer weiteren Ausgestaltung ist eine deaktivierbare Spannvorrichtung vorgesehen, die den Überbau um die Schwenkachse auf den hinteren Teil des Anhängers hinab vorspannt. Diese Spannvorrichtung reduziert zum einen die auf dem Dach aufliegende Last und dient zum anderen beispielsweise während des Ankuppelns und Abkuppeln des Anhängers dazu, den Aufbau vom Dach des Zugfahrzeugs fernzuhalten und einen problemlosen Kuppelvorgang zu ermöglichen. Schließlich dient die Spannvorrichtung in Zusammenhang mit der nachfolgend beschriebenen und eine weitere Fortbildung darstellenden längenverstellbaren Deichsel als Sicherheitseinrichtung. Dadurch, dass die Deichsel während des normalen Fahrbetriebs des Fahrzeuggespanns eingekürzt wird, wird die Gesamtlänge des Gespanns um die eingekürzte Länge verringert. Um bei Kurvenfahrten und Rangierfahrten ein Berühren des Zugfahrzeugs und des Anhängers in den entsprechenden zueinander ausgerichteten Bereichen zu verhindern, sind in weiterer Ausgestaltung die Räder des Anhängers lenkbar. Beispielsweise mit Hilfe eines Winkelkodierers, einer Auswerte- und einer Steuerelektronik sowie eines Aktors, der die Lenkung des Anhängers übernimmt, kann eine selbstnachlaufende Achse für die Laufräder des Anhängers geschaffen werden. Dabei ist dann bevorzugt der Lenkeinschlag der Vorderräder des Zugfahrzeugs die Führungsgröße für den Nachlaufeinschlag. Die Sollwertübergabe des Lenkeinschlags der Vorderräder des Zugfahrzeugs an die Räder des Anhängers erfolgt beispielsweise über Funk oder eine Kabelsteckverbindung.

Um den Anhänger beim seitlichen unkontrollierten Wegrutschen beispielsweise auf Glatteis in seiner Auslenkung so zu begrenzen, dass er nicht mit dem Zugfahrzeug kollidiert, ist in einer Ausführungsform der vertikale Einschlagwinkel des Anhängers zu dem Zugfahrzeug begrenzbar. In einer weiteren Ausführungsform wird in einem solchen Fall die Deichsel automatisch in die ausgefahrene Position verbracht, die Dämpfungseinrichtung getrennt und die Vorspanneinrichtung aktiviert, so dass der Vorbau von dem Dach des Zugfahrzeugs weggeschwenkt wird.

Für den Fall, dass die Lenkung des Anhängers ausfällt, sind mehrere Möglichkeiten der Kompensation möglich. Eine Möglichkeit ist der redundante Aufbau der kompletten Lenkung. Eine weitere Möglichkeit ist die zuvor geschilderte Verbringung der Deichsel in die ausgefahrene Position beispielsweise durch eine Katapulteinrichtung oder durch ein Abbremsen der Räder des Anhängers. Gleichzeitig wird der Vorbau von dem Dach des Zugfahrzeugs weggeschwenkt. Eine dritte Möglichkeit besteht darin, dass das Lenkgestänge der Räder von der ausgefallenen Stelleinrichtung getrennt wird wobei das Lenkgestänge so ausgebildet ist, dass ein automatischer Geradeausnachlauf der Räder bewirkt wird. Dabei wird der vertikale Einschlagwinkel des Anhängers zu dem Zugfahrzeug durch einen Schwenkbügel der an einem an dem Kupplungsgestänge angebrachten Halteelement angelenkt ist. Der Schwenkbügel begrenzt zusammen mit zwei Anschlägen am Boden des Anhängers den Einschlagwinkel zwischen dem Zugfahrzeug und dem Anhänger, sodass eine Kollision zwischen dem Zugfahrzeug und dem Anhänger nicht möglich ist. Die Anschläge sind bevorzugt über einen unteren Querbügel miteinander verbunden und bilden zusammen mit dem Boden des Anhängers eine Führung des Schwenkbügels.

Weiterhin können die Räder des Anhängers antreibbar sein. Dies ist insbesondere unter dem Aspekt einer einfachen Handhabung und aus Sicherheitsaspekten vorteilhaft, da mit dieser Ausgestaltung von einer Person alleine auch ein entsprechend großer Anhänger bewegt und gekuppelt werden kann. Dabei erfolgt der Antrieb beispielsweise durch einen elektrischen oder einen hydraulischen Antrieb. Im angekuppelten Zustand wird der Antrieb nicht benötigt und von den Rädern getrennt.

In Weiterbildung der Erfindung sind die elektrischen Schaltkreise von dem Zugfahrzeug und dem Anhänger über eine Stecker-Steckdosen-Verbindung verbindbar. Bevorzugt sind die Räder des Anhängers ebenso wie die Räder des Zugfahrzeugs mit einem ABS-System ausgestattet. Entsprechend sind die Bremskreise und die Bremssteuerung (ABS, ESP, usw.) von dem Zugfahrzeug und dem Anhänger über eine Stecker-Steckdosen-Verbindung verbindbar. Alternativ kann das ABS des Anhängers über Kraftmesssensoren, deren Signale bei Bedarf verstärkt werden und die bevorzugt an der Deichsel des Anhängers angebracht sind, gesteuert werden. Dabei kommt bevorzugt ein Drei-Kreis-ABS-System mit zwei Kreisen für das Zugfahrzeug und einem Kreis für den Anhänger zum Einsatz.

In weiterer Ausgestaltung der Erfindung ist an der Deichsel ein Traggestänge befestigt, das die Höhe des Dachs überragt und die Dämpfungseinrichtung trägt. An der Dämpfungseinrichtung ist ein Deichselgestänge angebracht, dass in eine Teleskopstange übergeht. Diese Teleskopstange trägt die Verbindungseinrichtung, die in geeigneter Weise an dem Dach des Zugfahrzeugs beispielsweise mittels einer Dachträgertraverse verbunden ist. Dabei ist die Dachträgertraverse zwischen den beiden Achsen des Zugfahrzeugs vorzugsweise in einem mittleren Bereich angeordnet. Diese Ausbildung hat folgende Vorteile:
die gesamte Einrichtung ist ohne Änderungen eines vorhandenen Zugfahrzeugs und eines Anhängers nachrüstbar,
bei Kurvenfahrten neigt sich der Anhänger in die Kurve,
durch Verlagerung der Dachbefestigung vor die Hinterachse wird ein seitliches Verschieben des Zugfahrzeughecks weitgehend verhindert,
durch die hohen Reibmomente in der Dämpfungseinrichtung, unterstützt von großen Hebelarmen, lassen sich weit höhere Schlingermomente als bei bestehenden Systemen abfangen,
seitliches Wanken kann ebenfalls durch die hohen Reibmomente in der Dämpfungseinrichtung besser als bei bestehenden Systemen abgefangen werden,
Der Fahrer des Fahrzeuggespanns merkt deutlicher als bei bestehenden Systemen, wenn das Fahrzeuggespann unruhig wird,
oberhalb der Dämpfungseinrichtung kann mit geringem Aufwand ein Spoiler befestigt werden.

In Weiterbildung der Erfindung ist die Dämpfungseinrichtung eine Drehmoment begrenzende steuerbare Einheit. Eine solche Einheit kann beispielsweise als Dämpfungsbacken aufnehmende Dämpfungstrommel ausgebildet sein. Weitere Möglichkeiten einer Ausgestaltung dieser Einheit sind eine steuerbare Scheibenbremse, ein hydraulischer Rotationsdämpfer mit geschwindigkeitsabhängiger Drehmomentbegrenzung oder eine schaltbare Kupplung mit Drehmomentüberwachung. Alle diese Ausbildungen haben den weiteren Vorteil, dass das Maß der Dämpfung beispielsweise durch eine Hydraulikeinrichtung, wie sie bei normalen Bremssystemen verwendet wird, leicht einstellbar ist. Dabei kann die Einstellung automatisch erfolgen und insbesondere so eingestellt werden, dass zulässige Belastungen, die beispielsweise über die Dachtraverse in das Dach des Zugfahrzeuge eingeleitet werden, nicht überschritten werden. Selbstverständlich ist es grundsätzlich auch möglich, die zuvor beschriebene Dämpfungseinrichtung mit einem Gestänge zu versehen, dass an den Längsseiten des Anhängers um eine Schwenkachse etwa in Höhe des Dachs des Zugfahrzeugs befestigt ist, wie dies zu einem früheren Ausführungsbeispiel beschrieben worden ist.

Auch ist es grundsätzlich möglich die zuvor beschriebene Dämpfungseinrichtung mit einem Überbau zu kombinieren. Gegebenenfalls ist dann aber eine Nachrüstbarkeit nicht gegeben.

Bevorzugt ist der Anhänger ein Wohnanhänger. Neben der Ausbildung des Anhängers als Wohnanhängers kann dieser auch als Nutzanhänger mit einer Ladefläche oder einem Laderaum ausgebildet sein. Auch kann der Nutzanhänger mit einem Spezialaufbau, beispielsweise einem Kran, versehen sein. Alle diese möglichen Anhänger können wahlweise mit dem Selbstfahrer verbunden werden.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Fig. 1:: Zugfahrzeug und Anhänger im gekoppelten Zustand,
- Fig. 2:: Zugfahrzeug und Anhänger gemäß Fig. 1 beim Überfahren eines Bodenhügels,
- Fig. 3:: Zugfahrzeug und Anhänger gemäß Fig. 1 beim Durchfahren einer Bodensenke,
- Fig. 4:: Zugfahrzeug und Anhänger gemäß Fig. 1 während des Anbeziehungsweise des Abkuppelns,
- Fig. 5:: eine schematische Draufsicht auf das Zugfahrzeug und den Anhänger,
- Fig. 6:: die Ausrichtung des Anhängers zu dem Zugfahrzeug während des Ankuppelvorgangs,
- Fig.7:: eine Einrichtung zur Begrenzung des Einschlagwinkels zwischen Zugfahrzeug und Anhänger,
- Fig.8 :: eine Sicherheitseinrichtung bei Ausfall der Anhängerlenkung,
- Fig. 9:: Zugfahrzeug und Anhänger in einer weiteren Ausführungsform,
- Fig.10:: Zugfahrzeug und Anhänger in einer noch weiteren Ausführungsform,
- Fig. 11:: Zugfahrzeug und Anhänger in einer nachrüstbaren weiteren Ausführungsform und

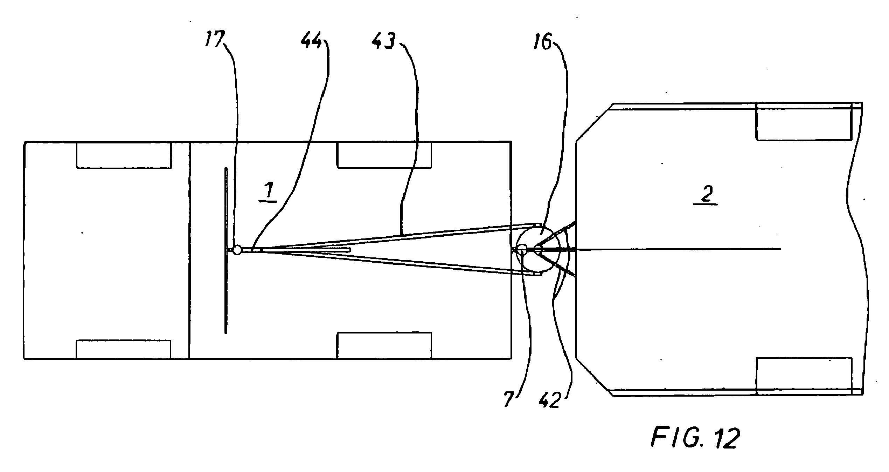

- Fig. 12:: eine schematische Draufsicht auf die Ausführung gemäß Fig. 11.

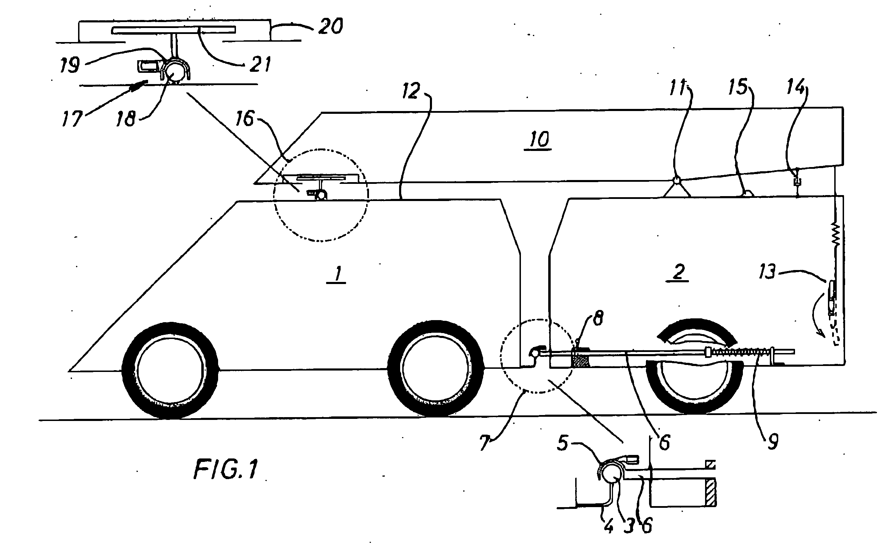

Das in Fig. 1 schematisch dargestellte Fahrzeuggespann besteht aus einem Zugfahrzeug 1 und einem Anhänger 2, die miteinander gekuppelt sind. Das Zugfahrzeug 1 ist vorzugsweise ein normal verfügbarer Pkw, Kleinbus oder Transporter und beispielsweise als Zweisitzer, Viersitzer oder Sechssitzer ausgebildet. Der Anhänger 2 kann von einem bekannten Wohnanhänger abgeleitet sein, ähnelt einem solchen aber zumindest im äußeren Erscheinungsbild. Das Zugfahrzeug 1 und der Anhänger 2 bilden im gekoppelten Zustand ein Fahrzeuggespann, das einem Wohnmobil ähnelt und ähnlich wie ein solches fahrbar ist. Im abgekuppelten Zustand des Anhängers 2 ist jedoch das Zugfahrzeug 1 eigenständig fahrbar. Die besonderen Vorzüge des Fahrzeuggespanns im gekoppelten Zustand bestehen darin, dass das Kombinationsfahrzeug als Einheit ähnlich wie ein Wohnmobil bezüglich der Fahrphysik, des Komforts und der gesetzlichen Auflagen fahrbar ist. Diese Fahrzeugform weist in allen gerade genannten Punkten Vorteile gegenüber einem herkömmlichen Gespann Pkw-Wohnanhänger auf.

Das Zugfahrzeug 1 weist eine handelsübliche Anhängerkupplung mit einem Kugelkopf 3 auf, der an dem Kupplungsgestänge 4 angeordnet ist. Auf dem Kugelkopf 3 ist wiederum eine handelsübliche Kugelkupplung 5 lösbar aufgesetzt, die Teil einer Deichsel 6 des Anhängers 2 ist. Die Anhängerkupplung bildet zusammen mit der Deichsel 6 die gesamte Kupplungseinrichtung 7. Die Deichsel 6 ist in eine ausgefahrene und - wie dargestellt - in eine eingefahrene Position längenverstellbar. In beiden Positionen ist die Deichsel durch beispielsweise einen Verriegelungsbolzen 8 festlegbar. Der Verriegelungsbolzen kann beispielsweise mechanisch, elektrisch, hydraulisch oder pneumatisch fernbedienbar sein. Die Deichsel weist weiterhin eine Federeinrichtung 9 auf, die die Deichsel 6 bei entriegeltem Verriegelungsbolzen 8 in die ausgefahrene Stellung verbringt.

Der Anhänger weist weiterhin einen Überbau 10 auf, der um eine Schwenkachse 11 beweglich an dem Anhänger 2 befestigt ist. Der Überbau 10 schließt mit dem Heck des Anhängers 2 ab und ragt mit der gegenüberliegenden Seite bis über das Dach 12 des Zugfahrzeugs 1. Im hinteren Bereich des Überbaus 10 ist eine deaktivierbare Spannvorrichtung 13 angebracht, die den Überbau 10 um die Schwenkachse 11 auf den hinteren Teil des Anhängers 2 hinab vorspannt. Diese Spannvorrichtung 13 reduziert zum einen die auf dem Dach aufliegende Last und dient zum anderen beispielsweise während des Ankuppelns und Abkuppeln des Anhängers dazu, den Überbau 10 vom Dach 12 des Zugfahrzeugs 1 fernzuhalten und einen problemlosen Kuppelvorgang zu ermöglichen. Zusätzlich ist neben der Spannvorrichtung 13 ein Dämpfer 14 angebracht, der die Bewegungen des Überbaus um die Schwenkachse 11 dämpft. Schließlich ist eine Anlage 15 im hinteren Bereich des Anhängers 2 vorgesehen, gegen die der Überbau 10 beispielsweise im abgekuppelten Zustand anliegt. Der Freiraum zwischen dem Anhänger 2 und dem Überbau 10 ist bevorzugt von einer Verkleidung, die die nötigen Bewegungen zwischen dem Anhänger 2 und dem Überbau 10 ermöglicht, verschlossen. Dadurch kann der Anhänger 2 und der Überbau 10 einem ineinander übergehenden und nicht getrennten Innenraum aufweisen.

Zwischen dem Überbau 10 des Anhängers 2 und dem Dach 12 des Zugfahrzeugs 1 ist eine Dämpfungseinrichtung 16 angeordnet, die eine in einem Dämpfungsgehäuse 20 angeordnete Dämpfungsscheibe 21 aufweist. Die Dämpfungseinrichtung 16 weist weiterhin eine trennbare Verbindungseinrichtung 17 auf, die im Ausführungsbeispiel aus einem Kupplungsbolzen 18 und einer damit zusammenwirkenden Kupplungspfanne 19 besteht. Diese Ausbildung hat insbesondere zusammen mit der Ausbildung der Dämpfungseinrichtung 16 in Form einer Dämpfungsscheibe 21 und einem Dämpfungsgehäuse 20 den Vorteil, dass bei Kurvenfahrt die Dämpfungsscheibe 21 nicht nur seitlich in dem Dämpfungsgehäuse 20 verschoben wird, sondern darüber hinaus auch entsprechend dem eingestellten Kurvenwinkel zwischen Zugfahrzeug 1 und Anhänger 2 in dem Dämpfungsgehäuse 20 gedreht wird. Dies ist insbesondere bei geringem horizontalem Versatz der Dämpfungseinrichtung 16 in Bezug zu der Kupplungseinrichtung 7 von Vorteil. Grundsätzlich ist es auch möglich die Verbindungseinrichtung 17 mit einer mit einem Kugelkopf und einer Kugelkupplung entsprechend der normalen Anhängerkupplung auszugestalten. Die Verbindungseinrichtung 17 ist um die durch den Kupplungsbolzen 18 horizontal verlaufende Achse drehbeweglich. Die Verbindungseinrichtung ist mechanisch, elektrisch, hydraulisch oder pneumatisch fernbedienbar ausgebildet. Die Dämpfungseinrichtung 16 ist an dem Dach 12 mit Vorrichtungen befestigt, die auf handelsüblichen, gegebenenfalls modifizierten Teilen von Dachträgersystemen basieren.

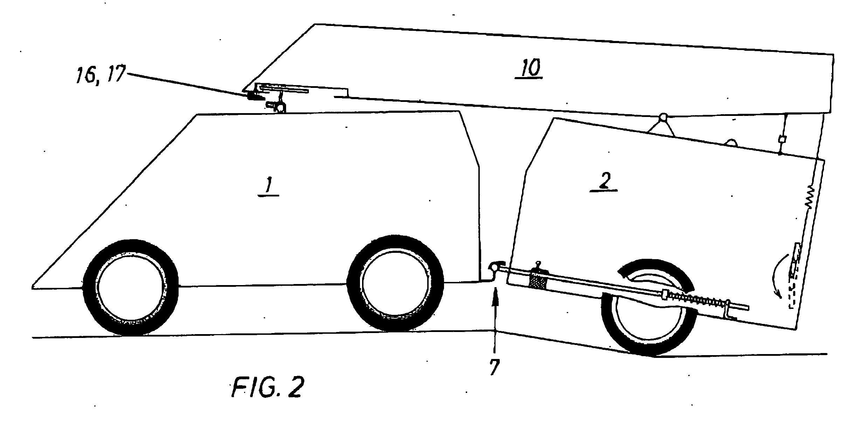

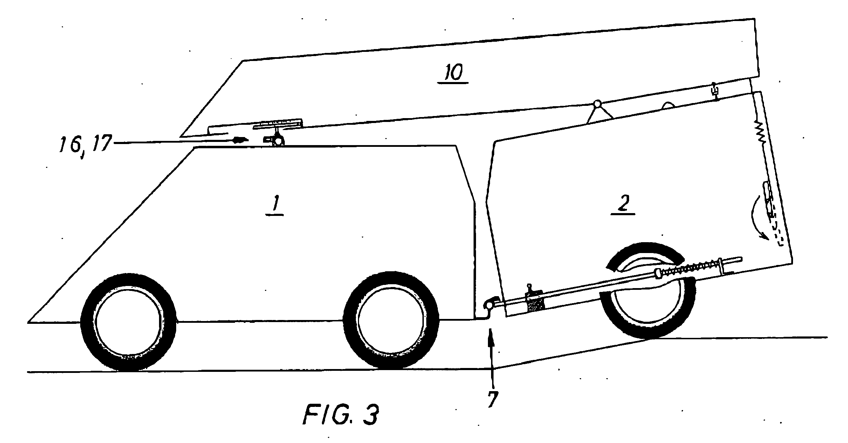

Die Figuren 2 und 3 zeigen das Verhalten des Zugfahrzeugs 1 und des Anhängers 2 mitsamt dem Überbau 10 beim Überfahren eines Bodenhügels (Fig. 2) und beim Durchfahren einer Bodensenke (Fig. 3). Dabei sind insbesondere der Anhänger 2, der Überbau 10 und die Dämpfungseinrichtung 17 so konstruktiv aufeinander und auf das Zugfahrzeug 1 abgestimmt, dass das Zugfahrzeug 1, der Anhänger 2 und der Überbau 10 einander nicht berühren können und die Dämpfungseinrichtung 17 die auftretenden Verschiebebewegungen des Überbaus 10 auf dem Dach 12 des Zugfahrzeugs 1 ermöglicht.

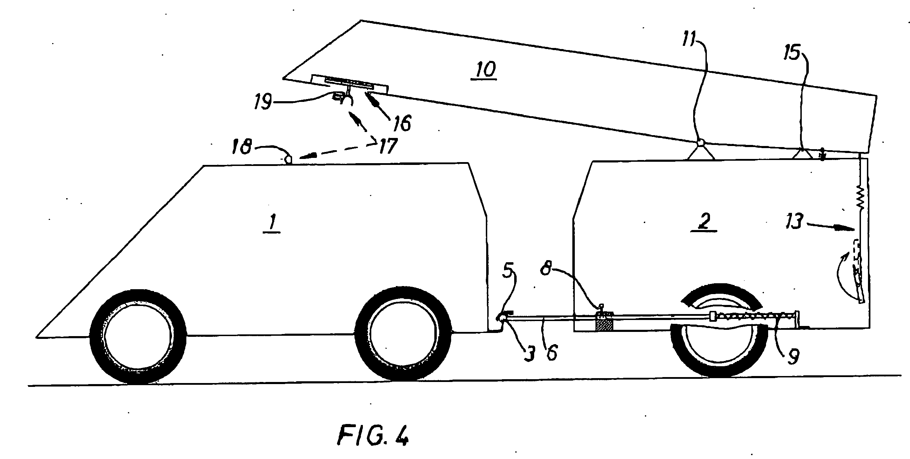

In der Darstellung nach Fig. 4 ist die Kugelkupplung 5 auf den Kugelkopf 3 aufgesetzt. Die Deichsel 6 ist im Gegensatz zu Fig. 1 in die ausgefahrene Stellung verbracht und mit dem Verriegelungsbolzen 8 in dieser Stellung arretiert. Die Verbindungseinrichtung 17 der Dämpfungseinrichtung 16 ist geöffnet und die Kupplungspfanne 19 beabstandet von dem Kupplungsbolzen 18 angeordnet, da der Überbau 10 von der Spanneinrichtung 13 um die Schwenkachse 11 nach hinten bis zur Auflage auf die Anlage 15 geschwenkt ist. Dazu ist die Spanneinrichtung 13 gegenüber Fig. 1 in eine Spannstellung verschwenkt. Die in dieser Figur dargestellte Stellung wird im Übrigen auch bei einer Gefahrensituation, die beispielsweise eine mögliche Kollision von dem Zugfahrzeug 1 und dem Anhänger befürchten lässt, automatisch auch während der Fahrt eingestellt.

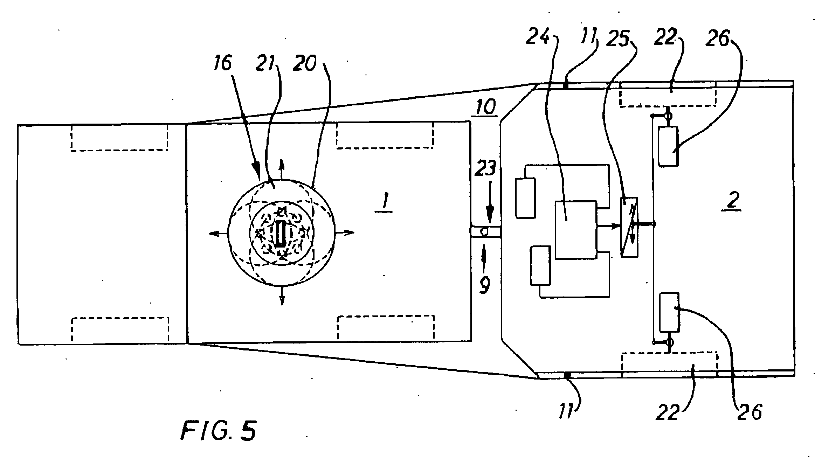

Fig. 5 zeigt eine schematische Draufsicht auf das Zugfahrzeug 1 und den Anhänger 2. Die Dämpfungseinrichtung 16 ist schematisch dargestellt, wobei insbesondere mögliche Bewegungen der Dämpfungsscheibe 21 in dem Dämpfungsgehäuse 20 dargestellt sind. Weiterhin ist der Aufbau einer Lenkung für die Räder 22 des Anhängers dargestellt. Mit einem Winkelkodierer 23 wird bei einer Kurvenfahrt der sich in der Kupplungseinrichtung 9 einstellende Winkel erfasst und einer Auswerte- und Steuereinrichtung 24 zugeführt. Die Auswerte- und Steuereinrichtung 24 ist mit einer Stelleinrichtung 25 (Aktor) verschaltet, die im Ausführungsbeispiel eine mechanische Lenkverstellung der Räder 22 bewirkt. Die Räder 22 sind insbesondere zum Rangieren des Anhängers 2 mit Antriebsmotoren 26 verbindbar. Zusammen mit der Lenkung und einem Stützrad, das beispielsweise wie bei einem herkömmlichen Anhänger an der Deichsel 6 befestigt wird, ist der Anhänger 2 somit zum Ankuppeln an das Zugfahrzeug 1 leicht rangierbar und ausrichtbar.

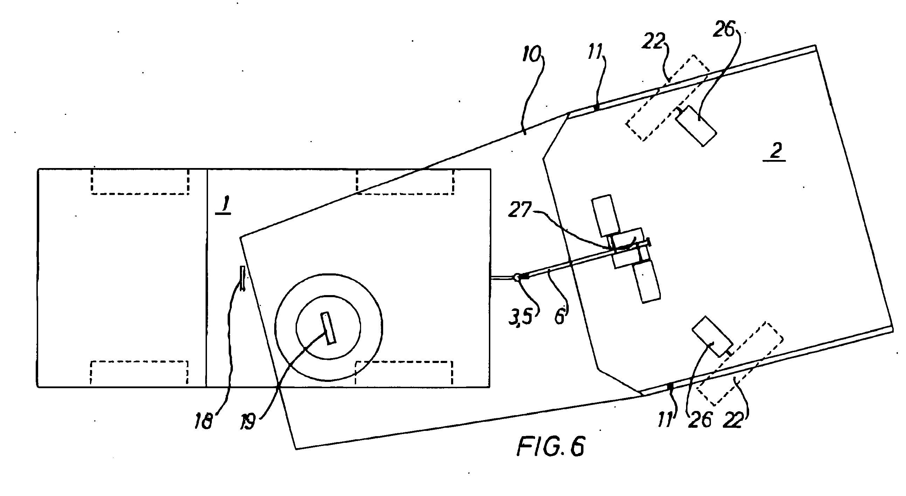

Der Vorgang des Ausrichtens des Anhängers 2 während des Ankuppelns ist in Fig. 6 dargestellt. Der Anhänger 2 steht bezogen zu der Längsachse des Zugfahrzeugs 1 schräg hinter dem Zugfahrzeug 1. Die Deichsel 6 ist in die ausgefahrene Stellung verbracht und die Kugelkupplung 5 mit dem Kugelkopf 3 verbunden. Der Überbau 10 ist - wie in Figur 4 dargestellt - 10 von der Spanneinrichtung 13 um die Schwenkachse 11 nach hinten bis zur Auflage auf die Anlage 15 geschwenkt. Um die Kupplungspfanne 19 zu dem Kupplungsbolzen 18 auszurichten und diese miteinander zu verbinden, wird der Anhänger 2 bei entsprechend eingeschlagener Lenkung der Räder 22 von den Antriebsmotoren 26 soweit auf das Zugfahrzeug 1 zu bewegt, bis die Deichsel 6 in die eingefahrene Stellung verbracht ist und sich die Kupplungspfanne 19 oberhalb des Kupplungsbolzens 18 befindet. Alternativ zu dem Antrieb der Räder 22 wird die Deichsel 6 mittels eines Motorantriebs 27 ebenfalls bei eingeschlagener Lenkung in die eingefahrene Stellung verbracht und die Kupplungspfanne 19 zu einer Stellung oberhalb des Kupplungsbolzen 18 bewegt. Schließlich ist es auch möglich, den Anhänger 2 mit zu dem in Fig. 6 umgekehrten Lenkeinschlag soweit zurückzubewegen, bis Zugfahrzeug 1 und Anhänger 2 in einer Flucht stehen. Danach wird die Deichsel 6 - wie beschrieben - in die eingezogene Stellung verbracht.

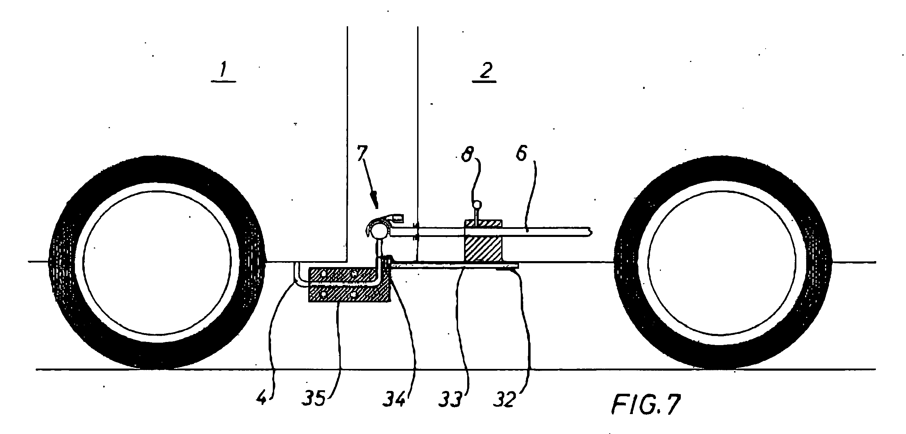

Fig. 7 zeigt eine Einschlagwinkel-Begrenzungseinrichtung zwischen dem Zugfahrzeug 1 und dem Anhänger 2. Diese Einschlagwinkel-Begrenzungseinrichtung ist eine Alternative zu der in Fig. 4 dargestellten Sicherheitseinrichtung, die den Überbau 10 nach hinten bis zur Auflage auf die Anlage 15 weggeschwenkt und die Deichsel 6 in die ausgefahrene Stellung verbringt.

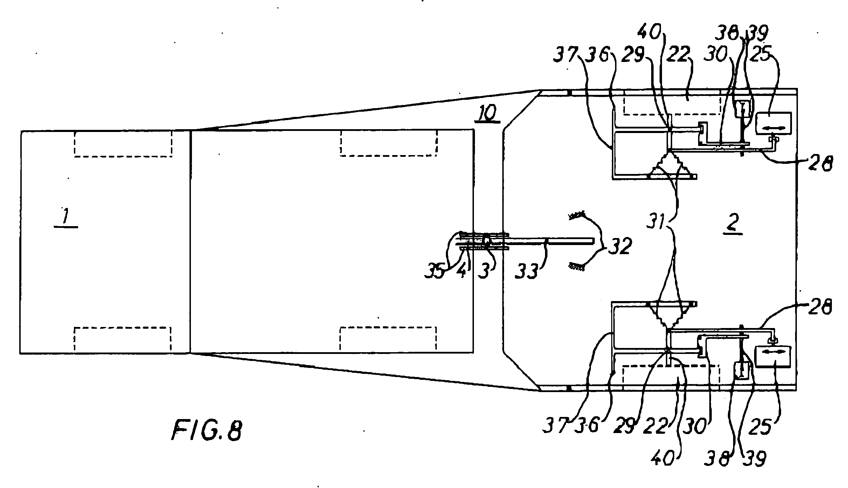

Sollte beispielsweise durch einen Defekt die Lenkung der Räder 22 des Anhängers 2 ausgefallen, oder aber beispielsweise bei rutschigem Untergrund der Anhänger 2 der Lenkbewegung der Räder 22 nicht folgen, verhindert die Einschlagwinkel-Begrenzungseinrichtung eine mögliche Kollision des Anhängers 2 mit dem Zugfahrzeug 1. Hierzu ist an dem Kupplungsgestänge 4 ein Halteelement 35 befestigt, das seinerseits einen Schwenkbügel 33 trägt. Dieser Schwenkbügel 33 ist um eine horizontale Achse gelenkig an dem Halteelement 35 angebracht, sodass die in den Figuren 2 und 3 dargestellten Bewegungen möglich sind. Zusätzlich kann der Schwenkbügel 33 beispielsweise durch eine Zugfeder 34 zwischen dem Kupplungsgestänge 4 und den Schwenkbügel 33 gegen den Boden des Anhängers 2 vorgespannt sein. Der Schwenkbügel 33 begrenzt zusammen mit zwei Anschlägen 32 (siehe auch Fig. 8) den Einschlagwinkel zwischen dem Zugfahrzeug 1 und dem Anhänger 2, sodass eine Kollision zwischen dem Zugfahrzeug 1 und dem Anhänger 2 nicht möglich ist. Die Anschläge 32 sind bevorzugt über einen unteren Querbügel miteinander verbunden und bilden zusammen mit dem Boden des Anhängers eine Führung des Schwenkbügels 33. Bei dieser Ausführungsform kann die Deichsel 6 so ausgebildet sein, dass sie immer in der eingefahrenen Position verbleibt. Es ist aber auch - wie in der Figur 7 dargestellt - möglich, die Deichsel 6 so auszubilden, dass sie beispielsweise zum Ankuppeln des Anhängers 2 an das Zugfahrzeug 1 in die ausgefahrene Position verbracht werden kann.

Bei einem Ausfall der Anhängerlenkung sollen bei dieser Ausführungsform die Räder 22 in eine Geradeauslauf-Position gebracht werden. Die Geradeauslauf-Position wird beispielsweise nach der Ausführungsform gemäß Fig. 8 dadurch eingestellt, dass die Stelleinrichtung 25, die hier anders als in Figur 5 für jedes Rad 22 dargestellt ist, von dem Lenkgestänge 28 der Räder 22 getrennt wird. Gleichzeitig wird die Verriegelung 30 deaktiviert. Diese Trennung und Deaktivierung führt die Trennvorrichtung 38 durch eine Bewegung der Trennstange 39 in Richtung des dargestellten Pfeils aus. Nach der Trennung und Deaktivierung ist das Radführungsgestänge 37 um die Drehachse 36 in der Form frei beweglich, dass sich ein selbststabilisierendes nachlaufendes System bildet, an dem das Rad 22 mit einer Radachse 40 über ein Gelenk 29 und zwei Federn 31 befestigt ist.

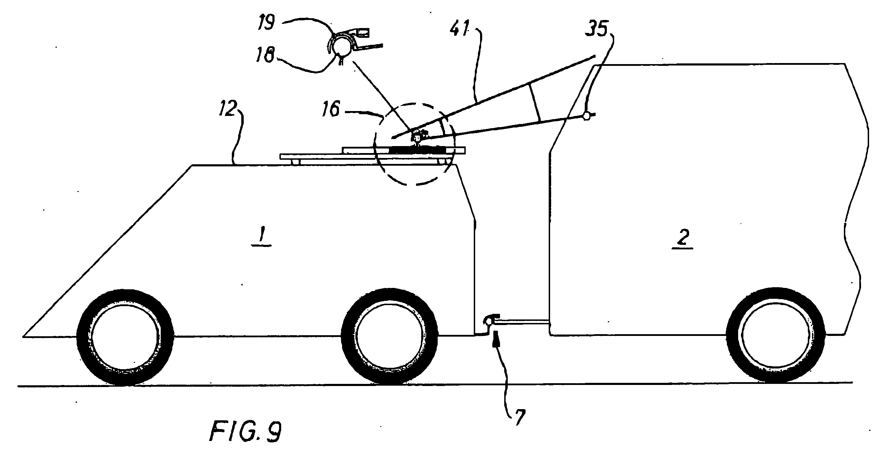

Fig. 9 zeigt die Anordnung der Dämpfungseinrichtung 16 bei einem Anhänger 2, dessen Deichsel 6 konventionell fest an dem Anhänger 2 festgelegt und so ausgebildet ist, dass bei normaler Vorwärtsfahrt auch bei vollem Lenkeinschlag der Vorderräder des Zugfahrzeugs 1 ein Berühren des Anhängers 2 und des Zugfahrzeugs 1 ausgeschlossen ist. Dabei sind die Räder 22 des Anhängers 2 in dieser Ausführungsform nicht gelenkt. An dem Anhänger ist auf beiden Längsseiten ein Gestänge 41 lösbar und schwenkbar um die Achse 35 analog zu der Schwenkachse 11 befestigt. Das Gestänge 41 kann aerodynamisch verkleidet und/oder auch in Anlehnung an den Überbau 10 ausgebildet sein. Zwischen dem Gestänge 41 und dem Dach 12 des Zugfahrzeugs 1 ist wiederum die Dämpfungseinrichtung 16 mit dem aus Fig. 1 bekannten Aufbau angeordnet. Die Dämpfungseinrichtung 16 weist weiterhin die trennbare Verbindungseinrichtung 17 auf, die im Ausführungsbeispiel aus dem Kupplungsbolzen 18 und einer damit zusammenwirkenden Kupplungspfanne 19 besteht. Die Dämpfungseinrichtung 16 ist an dem Dach 12 mit Vorrichtungen befestigt, die auf handelsüblichen, gegebenenfalls modifizierten Teilen von Dachträgersystemen basieren. Die Dämpfungseinrichtung 16 ist vertikal und horizontal so weit versetzt zu der Kupplungseinrichtung 7 angeordnet sowie derart ausgebildet, dass sich einerseits die gewünschte Dämpfung einstellt, andererseits die volle Beweglichkeit des Anhängers 2 zu dem Zugfahrzeug 1 bei Kurvenfahrt und beim Überfahren eines Bodenhügels und beim Durchfahren einer Bodensenke gegeben ist.

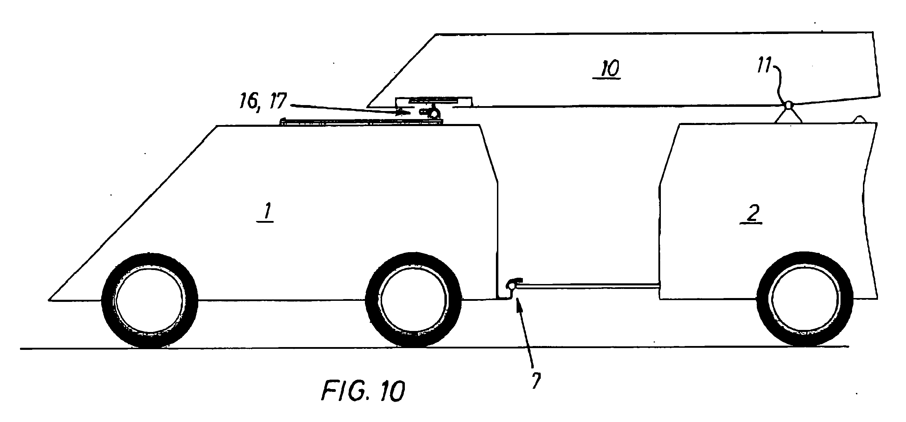

Das Ausführungsbeispiel gemäß Fig. 10 weist prinzipiell den gleichen Aufbau wie das Ausführungsbeispiel nach Fig. 9 auf. Der Unterschied besteht darin, dass bei dieser Ausführungsform das Gestänge 41 durch den bekannten Überbau 10 ersetzt ist.

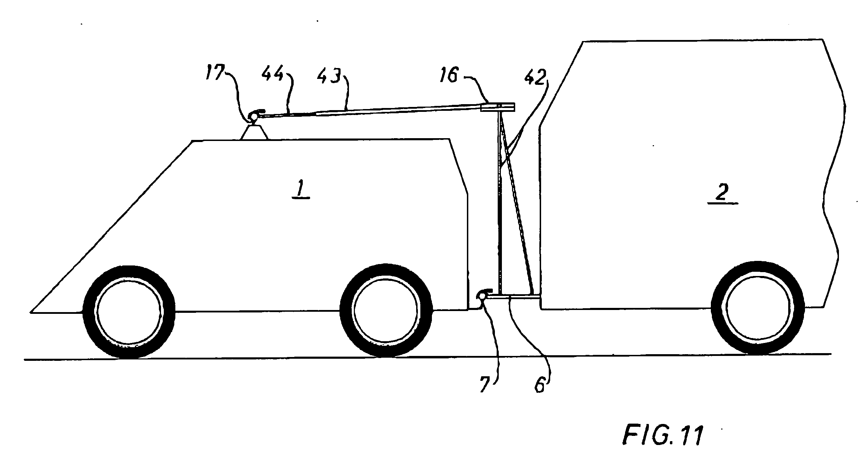

Das Ausführungsbeispiel einer Dämpfungsvorrichtung gemäß den Figuren 11 rund 12 zeichnet sich dadurch aus, dass diese gesamte Einrichtung an bestehenden und vorhandenen Zugfahrzeugen 1 und an Anhängern 2 nachrüstbar ist. Hierzu wird an der Deichsel 6 ein Traggestänge 42 befestigt, dass die Höhe des Dachs 12 des Zugfahrzeugs 1 überragt und die Dämpfungseinrichtung 16 trägt. Die Dämpfungseinrichtung 16 weist beispielsweise eine Dämpfungsbacken aufnehmende Dämpfungstrommel ähnlich einer normalen Trommelbremse auf. An der so ausgebildeten Dämpfungseinrichtung 16 ist ein Deichselgestänge 43 befestigt, dass sich in eine Teleskopstange 44 fortsetzt. An der Teleskopstange 44 ist die Verbindungseinrichtung 17 angeordnet, die wiederum in geeigneter Weise beispielsweise mittels einer Dachtraverse an dem Dach 12 des Zugfahrzeugs 1 befestigt ist. In erster Linie werden mit dieser Dämpfungsvorrichtung Schlingerbewegungen und Wankbewegungen des Anhängers 2 gegenüber dem Zugfahrzeug 1 gedämpft beziehungsweise abgefangen; Nickbewegungen des Anhängers 2 gegenüber dem Zugfahrzeug 1 werden von der ungedämpften Teleskopstange 44 zugelassen, wobei es aber auch möglich ist, in die Teleskopstange 44 einen Dämpfer in der Art eines Stossdämpfers zu integrieren.

### Bezugszeichen:

- 1: Zugfahrzeug
- 2: Anhänger
- 3: Kugelkopf
- 4: Kupplungsgestänge
- 5: Kugelkupplung
- 6: Deichsel
- 7: Kupplungseinrichtung
- 8: Verriegelungsbolzen
- 9: Federeinrichtung
- 10: Überbau
- 11: Schwenkachse
- 12: Dach
- 13: Spannvorrichtung
- 14: Dämpfer
- 15: Anlage
- 16: Dämpfungseinrichtung
- 17: Verbindungseinrichtung
- 18: Kupplungsbolzen
- 19: Kupplungspfanne
- 20: Dämpfungsgehäuse
- 21: Dämpfungsscheibe
- 22: Rad
- 23: Winkelkodierer
- 24: Auswerte- und Steuereinrichtung
- 25: Stelleinrichtung
- 26: Antriebsmotor
- 27: Motorantrieb
- 28: Lenkgestänge
- 29: Gelenk
- 30: Verriegelung
- 31: Feder
- 32: Anschlag
- 33: Schwenkbügel
- 34: Zugfeder
- 35: Halteelement
- 36: Drehachse
- 37: Radführungsgestänge
- 38: Trennungsvorrichtung
- 39: Trennungsstange
- 40: Radachse
- 41: Gestänge
- 42: Traggestänge
- 43: Deichselgestänge
- 44: Teleskopstange

## Patentansprüche

1. Fahrzeuggespann, bestehend aus einem Zugfahrzeug und einem Anhänger, die mit einer Kupplungseinrichtung, die einen an dem Zugfahrzeug befestigten Kupplungskopf und eine mit dem Kupplungskopf beweglich verbindbare an dem Anhänger befestigte Deichsel aufweist, wobei weiterhin eine Dämpfungseinrichtung gegen Schlingerbewegungen und Wankbewegungen des Anhängers gegenüber dem Zugfahrzeug vorgesehen ist, **dadurch gekennzeichnet, dass** die Dämpfungseinrichtung (16) getrennt von der Kupplungseinrichtung (7) an dem Zugfahrzeug (1) und dem Anhänger (2) angeordnet ist.

2. Fahrzeuggespann nach Anspruch 1,
**dadurch gekennzeichnet, dass** die Dämpfungseinrichtung (16) vertikal und horizontal versetzt zu der Kupplungseinrichtung (7) angeordnet ist.

3. Fahrzeuggespann nach Anspruch 2,
**dadurch gekennzeichnet, dass** die Dämpfungseinrichtung (16) im Bereich des Dachs (12) des Zugfahrzeugs (1) angeordnet ist.

4. Fahrzeuggespann nach einem der vorherigen Ansprüche,
**dadurch gekennzeichnet, dass** die Dämpfungseinrichtung (16) eine trennbare Verbindungseinrichtung (17) aufweist.

5. Fahrzeuggespann nach Anspruch 4,
**dadurch gekennzeichnet, dass** die Verbindungseinrichtung (17) einen Kupplungsbolzen (18) und eine damit zusammenwirkende Kupplungspfanne (19) aufweist.

6. Fahrzeuggespann nach einem der vorherigen Ansprüche,
**dadurch gekennzeichnet, dass** die Dämpfungseinrichtung (16) eine in einem Dämpfungsgehäuse (20) angeordnete Dämpfungsscheibe (21) aufweist.

7. Fahrzeuggespann nach einem der vorherigen Ansprüche,
**dadurch gekennzeichnet, dass** der Anhänger (2) einen über das Dach (12) des Zugfahrzeugs (1) ragenden Überbau (10) aufweist.

8. Fahrzeuggespann nach Anspruch 7,
**dadurch gekennzeichnet, dass** der Überbau (10) um eine Schwenkachse (11) im vorderen Bereich des Anhängers (2) horizontal zu der Längsachse des Fahrzeuggespanns schwenkbar ist.

9. Fahrzeuggespann nach Anspruch 8,
**dadurch gekennzeichnet, dass** eine deaktivierbare Spannvorrichtung (13) vorgesehen ist, die den Überbau (10) um die Schwenkachse (11) auf den hinteren Teil des Anhängers (2) hinab vorspannt.

10. Fahrzeuggespann nach einem der vorherigen Ansprüche,
**dadurch gekennzeichnet, dass** die Deichsel (6) längenverstellbar ist.

11. Fahrzeuggespann nach einem der vorherigen Ansprüche,
**dadurch gekennzeichnet, dass** die Räder (22) des Anhängers (2) lenkbar sind.

12. Fahrzeuggespann nach einem der vorherigen Ansprüche,
**dadurch gekennzeichnet, dass** der vertikale Einschlagwinkel des Anhängers (2) zu dem Zugfahrzeug (1) begrenzbar ist.

13. Fahrzeuggespann nach einem der vorherigen Ansprüche,
**dadurch gekennzeichnet. dass** an der Deichsel (6) ein Traggestänge (42) befestigt ist, das die Höhe des Dachs (12) überragt und die Dämpfungseinrichtung (16) trägt.

14. Fahrzeuggespann nach Anspruch 13,
**dadurch gekennzeichnet, dass** die trennbare Verbindungseinrichtung (17) von der Dämpfungseinrichtung (16) beabstandet angeordnet ist.

15. Fahrzeuggespann nach einem der Ansprüche 13 oder 14,
**dadurch gekennzeichnet, dass** die Dämpfungseinrichtung (16) eine Drehmoment begrenzende steuerbare Einheit aufweist.
